# DEMANDE DE BREVET EUROPEEN

(11) **EP 1 522 877 A1**
(43) Date de publication de la demande: **13.04.2005**
(21) Numéro de dépôt: 04104807.5
(22) Date de dépôt: 30.09.2004
(51) Int. Cl.: G01V 1/20, H05K 5/02

(54) **Container résistant adapté aux antennes linéaires sous-marines**

(30) Priorité: 10.10.2003 FR 0311898
(71) Demandeur: Thales, 92200 Neuilly Sur Seine (FR)
(72) Inventeur: Borel, Christophe THALES Intellectual Property, 94117 ARCUEIL (FR)
(74) Mandataire: Lucas, Laurent Jacques

(57) **Abrégé**

L'invention se rapporte aux dispositifs permettant de maintenir en place et de protéger mécaniquement les capteurs et les composants électroniques intégrés dans les antennes linéaires sous-marines. Plus généralement elle propose une solution pour protéger mécaniquement des éléments relativement longs et rigides, disposés dans une structure souple, de type tuyau souple par exemple, dont le stockage se fait par enroulement sur un treuil.

L'invention a pour objet un container dont la structure comporte au moins un tube (21) réalisé d'une seule pièce, deux embouts (22) venant se placer aux extrémités du tube et d'au moins deux entretoises (23) permettant l'assemblage des embouts et du tube. Les embouts sont constitués d'au moins deux pièces mécaniques (24) qui s'assemblent par simple emboîtement. L'assemblage complet du container selon l'invention est achevé par simple insertion des extrémités du tube dans les embouts et enclipsage des entretoises sur les embouts.

L'invention s'applique en particulier au domaine des antennes linéaires sonar.

## Description

L'invention décrite et revendiquée dans le présent document se rapporte aux dispositifs permettant de maintenir en place et de protéger mécaniquement les capteurs et les composants électroniques intégrés dans les antennes linéaires sous-marines. Plus généralement elle propose une solution pour protéger mécaniquement des éléments relativement longs et rigides, disposés dans une structure souple, de type tuyau souple par exemple, dont le stockage se fait par enroulement sur un treuil. L'invention s'applique en particulier au domaine des antennes linéaires sonar.

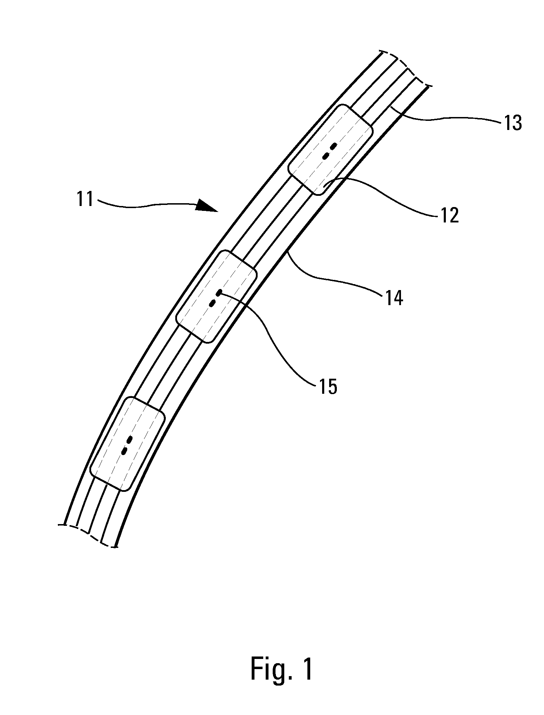

Les antennes sonar linéaires ont de manière générale une structure basée d'un ensemble d'éléments communément appelés container ou centreurs. Cette structure est illustrée schématiquement par la figure 1. Dans ces containers 12 sont disposés les capteurs ou hydrophones ainsi que l'électronique associée Ces containers ont généralement de forme de cylindres ouverts à leurs extrémités. Ils sont positionnés à intervalle régulier le long de la structure 12. La structure comporte également des câbles 13 qui traversent les différents containers. Les câbles 13 traversent les containers en cheminant par exemple à l'intérieur de rainures longitudinales régulièrement réparties sur la paroi interne des containers. La structure peut par exemple comporter trois câbles courant sur les parois internes de chaque container en passant dans trois rainures disposées à 120° sur la circonférence de la paroi interne. L'ensemble est généralement inséré dans un tuyau souple 14 qui constitue le revêtement de l'antenne et dont la longueur est celle de l'antenne. L'antenne se présente ainsi comme un chapelet d'éléments cylindriques régulièrement espacés et placés dans une gaine souple.

En fonctionnement l'antenne est remplie d'un fluide isolant d'un point de vue électrique, comme par exemple de l'huile, qui baigne l'ensemble des éléments contenus dans l'antenne. Le fluide employé est notamment choisi pour sa transparence acoustique ainsi que pour sa densité qui doit permettre de ramener la densité de l'ensemble de l'antenne à une valeur voisine de celle du milieu, l'eau de mer par exemple.Les câbles sont principalement destinés à supporter et répartir les efforts de traction que subit l'antenne lorsqu'elle est mise à la mer ou remontée à bord, traction que l'enveloppe souple ne peut supporter.

Le positionnement des containers à l'intérieur de cet ensemble est déterminé par les caractéristiques acoustiques de l'antenne. Pour réaliser ce positionnement, un moyen connu consiste arrimer les containers sur un des câbles de reprise d'effort. A cet effet le câble dédié à l'arrimage est fixé sur chaque container, sur une zone 15 située sensiblement à mi-distance des extrémités du container. La fixation peut par exemple être réalisée par collage.

La structure en chapelet ainsi réalisée pose un problème important quant à la résistance mécanique des containers, lors du stockage de l'antenne dans le bâtiment remorqueur. En effet le stockage d'une antenne linéaire sous-marine est couramment réalisé en enroulant cette antenne sur un treuil, opération qui revient à enrouler un ensemble de segments rectilignes sur un profil circulaire. Ce stockage a pour inconvénient d'imposer d'importantes contraintes d'écrasement aux containers, notamment ceux situés les plus près de l'axe du treuil. C'est pourquoi de manière générale les containers ont une structure cylindrique, la plus apte à supporter ces contraintes.

De manière connue, les containers peuvent être réalisés d'une seule pièce. Ce mode de réalisation permet d'obtenir un container très rigide et supportant bien les contraintes d'écrasement. En revanche le montage de l'antenne est alors en enfilant chaque container sur les câbles de reprise d'effort jusqu'à la position voulue puis fixation sur celui des câbles utilisé pour l'arrimage. Par ailleurs en cas de dommage, si la réparation d'un container endommagé nécessite sa dépose, il faut alors également déposer tous les containers situés en amont ou en aval de ce dernier. Par la suite après réparation du container défectueux, il faut renfiler et refixer dans la bonne position tous les containers qui ont été déposés. Ce mode de réalisation présente donc un inconvénient important pour la durée des opérations de maintenance.

De manière également connue, les containers peuvent être réalisés en deux demi-cylindres assemblés mécaniquement, généralement au moyen de vis.

Dans ce mode de réalisation un seul des demi-cylindres est arrimé au câble de reprise d'effort dédié à cette tâche. Ce mode de réalisation permet un démontage et un remontage plus simple d'un container défectueux et supprime l'inconvénient d'avoir à démonter inutilement des containers en bon état. De même lors du remontage, le demi-cylindre arrimé au câble de reprise d'effort n'ayant pas été désarrimé, il n'est pas nécessaire de procéder au repositionnement ni au réarrimage du container. En revanche, l'assemblage mécanique au moyen de vis présente l'inconvénient d'induire la nécessité d'un contrôle périodique du serrage des vis de façon à s'assurer qu'aucune vis n'est desserrée au point de quitter sont logement. Une vis évoluant au hasard tout au long de l'antenne risquerait en effet de provoquer des courts-circuits en venant au contact des circuits électroniques contenus dans les containers.

Afin de pallier les inconvénients liés à ces modes connus de réalisation de containers, l'invention a pour objet un container dont la structure composite comporte au moins un tube réalisé d'une seule pièce, deux embouts venant se placer aux extrémités du tube et trois entretoises permettant l'assemblage des embouts et du tube. Les embouts présentent l'avantage d'être constitués de trois pièces mécaniques identiques qui s'assemblent par simple emboîtement. L'assemblage complet du container selon l'invention est quant à lui avantageusement réalisé par simple insertion des extrémités du tube dans les embouts et enclipsage des entretoises sur les embouts. Par rapport à un container composé de deux demi-cylindres, le container selon l'invention présente avantageusement une résistance accrue et une plus grande facilité de montage et de démontage. De plus, dans la mesure où le container selon l'invention est monté par emboîtement son utilisation évite le risque d'éparpillement de moyens d'assemblage tels que des vis complètement desserrées dans l'antenne et au voisinage de circuits électroniques.

D'autres caractéristiques et avantages seront exposés au cours de la description qui suit, basée sur les figures annexées qui représentent :
- La figure 2, une vue éclatée du container selon l'invention,
- La figure 3, une vue de côté du container assemblé,
- La figure 4, une vue en perspective du container assemblé.

### DESCRIPTION DETAILLEE D'UN MODE DE REALISATION PREFERE.

La description qui suit présente sur un exemple particulier la structure du container selon l'invention. Elle n'est bien entendu pas limitative et a pour objet de mettre en évidence les caractéristiques générales du dispositif.

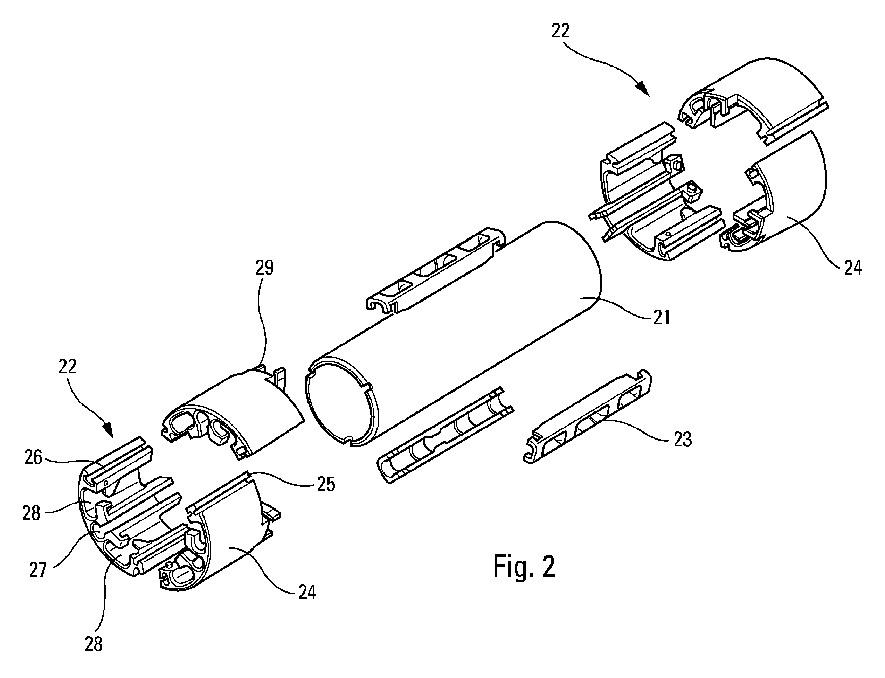

La figure 2 présente une vue éclatée du container selon l'invention qui met en évidence la modularité de la structure. Dans ce mode de réalisation préféré, pris à titre d'exemple, le container comporte trois sous-ensembles : un premier sous-ensemble constitué d'un cylindre 21, un second sous-ensemble comprenant deux embouts 22 et un troisième sous-ensemble constitué de trois entretoises d'assemblage 23.

L'élément 21 consiste en un cylindre réalisé en une seule pièce. Cet élément renferme les capteurs acoustiques ainsi que l'électronique qui y est associée. Ces éléments sont par exemple montés sur un support logé dans le cylindre.

Les embouts 22 sont des éléments terminaux qui assurent l'arrimage du container aux câbles de reprise d'effort ainsi que le guidage des câbles électriques qui relient les modules entre eux. Les embouts 22 viennent s'emboîter sur les extrémités du cylindre 21. Chaque embout 22 est une pièces démontables comportant trois éléments identiques 24 qui s'assemblent au moyen d'empreintes mâles 25 et femelles 26 pour former l'embout. Chaque élément 24 présente une paroi interne comportant trois cannelures, une cannelure 27 destinée au passage d'un câble de reprise d'effort et deux cannelures 28 destinées au cheminement de câbles électriques.

L'assemblage du cylindre 21 avec les embouts 22 est complété par la mise en place des entretoises 23. Les entretoises viennent se plaquer sur le corps du cylindre 22 entre les deux embouts sur lesquels elles viennent se fixer par enclipsage, en s'insérant par exemple dans les logements 29. Elle réalise ainsi une liaison mécanique des deux embouts autour du cylindre, rendant solidaires les différents éléments composant le container. Le dispositif ainsi réalisé présente l'avantage de garder une structure cylindrique résistant à l'écrasement.

Les entretoises 23 sont des structures creuses qui forment des passages dont les ouvertures se trouvent dans le prolongement des cannelures 27 dont sont pourvus les embouts. En plaquant les câbles de reprise d'effort contre la paroi externe du cylindre 21, elles assurent avantageusement le cheminement de ces câbles le long de cette paroi ainsi que leur maintien en position. Le cheminement des câbles sur la paroi externe du cylindre, et non à l'intérieur, présente l'avantage de laisser libre la totalité du volume intérieur du cylindre. Cet espace libre est ainsi destiné tout entier aux capteurs et au matériel électronique associé dont le nombre et la taille peuvent ainsi être plus importants, à dimensions égales, que dans les dispositifs connus de l'art antérieur.

Le positionnement du container selon l'invention dans une antenne linéaire sous-marine, peut être réalisé de manière simple, par exemple en arrimant une des entretoises au câble de reprise d'effort qui la traverse. Pour ce faire, on peut par exemple effectuer un surmoulage local du câble en positionnant le câble dans l'entretoise, puis en fixant l'entretoise sur le câble à l'aide de résine. De la sorte après désassemblage, le container selon l'invention, et notamment le cylindre contenant les équipements acoustiques et électroniques, se trouve libre de toute liaison avec les câbles de reprise d'effort et peut ainsi être désolidarisé du reste de l'antenne. Seule l'entretoise surmoulée reste en position fournissant ainsi avantageusement un repère fixe pour le positionnement du container dans l'antenne.

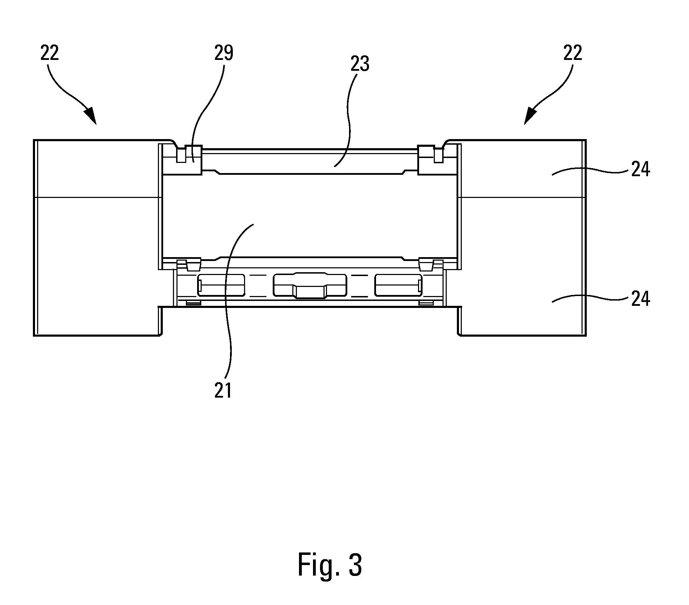

La figure 3 qui représente une vue sommaire de profil du container selon l'invention complète la figure 2 en montrant comment l'assemblage des embouts 22 sur le cylindre 21 est achevé par le simple enclipsage des entretoises 23 dans les logements 29 que comportent les embouts. L'assemblage du container ne demande donc aucun outillage particulier. Il est de plus réalisé sans aucun élément de fixation de type vis ou goupille par exemple, dont la fixation ou le serrage doivent être contrôlés pour éviter tout risque de court-circuit.

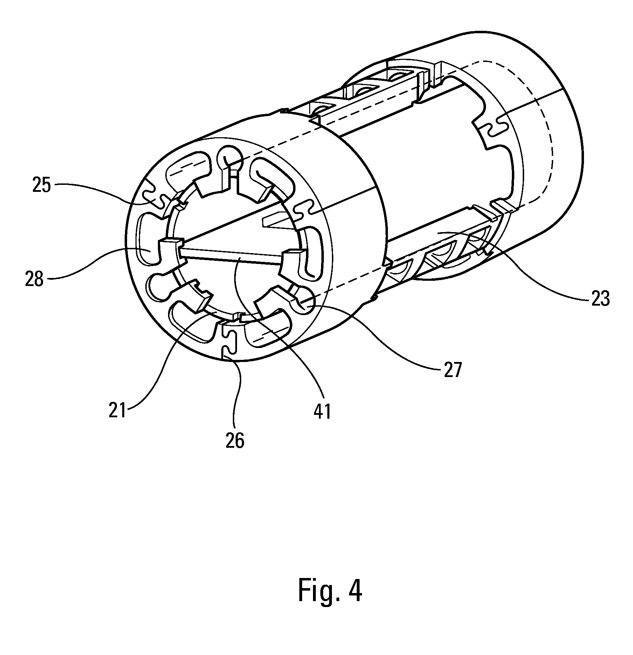

La figure 4 présente une vue en perspective du container selon l'invention. Sur cette vue apparaît distinctement la façon dont sont assemblés les trois éléments 24 qui constituent un embout. L'embout apparaît ainsi réalisé à la façon d'un assemblage tenon-mortaise, par emboîtement de l'empreinte mâle 25 d'un des éléments dans l'empreinte femelle 26 d'un des autres éléments.

Sur la figure 4, la structure des éléments 24 qui constituent les embouts apparaît clairement. Chaque élément comporte une empreinte mâle 25, une empreinte femelle 26, deux cannelures 28 destinées au passage de câbles électriques et une cannelure 27 destinée au passage d'un câble de reprise d'effort. De même l'illustration met en évidence les alignements des cannelures 27 et des entretoises 23 dont la structure creuse est nettement visible. Ces alignements forment des gouttières à l'intérieur desquelles cheminent les câbles de reprise d'effort.

La figure 4 présente également un circuit 41 logé à l'intérieur du tube cylindrique 21. Ce circuit représente un exemple d'implantation possible des éléments acoustiques et électroniques que renferme le container. Comme on peut le constater sur la figure, le cheminement des câbles de reprise d'effort sur la paroi externe du tube 21 libère avantageusement l'espace intérieur du tube au profit des composants.

Dans l'exemple illustré, le nombre d'éléments 24 qui constituent un embout est de trois. Ce nombre peut, bien entendu, être différent selon les variantes de réalisation. De même, le nombre de cannelures peut être différent, l'essentiel étant qu'après assemblage des éléments, un embout comporte au moins autant de cannelures qu'il y a de câbles à passer.

Comme on peut le constater au travers de l'exposé qui précède, le container selon l'invention, présente vis à vis de l'art antérieur des avantages importants quant à sa simplicité de réalisation et à sa facilité d'assemblage. Plus encore, son utilisation dans la réalisation d'antennes linéaires sous-marines permet de faciliter la maintenance de ces dernières. En effet, les containers selon l'invention ne sont pas enfilés sur les câbles de reprise d'effort, mais simplement arrimés à eux de manière amovible par l'intermédiaire d'embouts démontables. Ainsi, en cas de maintenance par exemple, la dépose d'un container peut donc avantageusement être effectuée sans qu'il y ait besoin de déposer les containers situés en amont ou en aval de l'antenne.

La description du dispositif illustré par les figures 2 à 4 présente pour exemple un mode particulier de réalisation du dispositif selon l'invention. Il existe bien entendu d'autres variantes de réalisation présentant les mêmes caractéristiques avantageuses, variantes portant notamment sur le nombre et la forme des éléments qui constituent les embouts, sur la longueur des embouts par rapport à la longueur du cylindre, sur le nombre d'entretoises et sur la façon de réaliser l'enclipsage des entretoises sur les embouts, ou encore sur le maintien du container dans une position fixe à l'intérieur de l'antenne. On peut notamment noter que le dispositif peut ne comporter que deux entretoises et que les embouts peuvent être par exemple réalisés par assemblages de deux éléments demi-circulaires.

## Revendications

1. Container pour antenne linéaire sous-marine, **caractérisé en ce qu'**il comporte au moins un tube cylindrique (21), deux embouts (22) emboîtés sur les extrémités du tube et au moins deux entretoises (23) qui maintiennent les embouts en position sur les extrémités du tube, les entretoises étant fixées aux embouts par enclipsage, les embouts étant constitués d'un assemblage comportant au moins deux éléments (24) emboîtés l'un dans l'autre, les embouts et les entretoises assurant un arrimage amovible du container sur des câbles de reprise d'effort (13) et le guidage desdits câbles le long de la paroi externe du tube.

2. Dispositif selon la revendication 1, **caractérisé en ce que** chacun des éléments (24) qui composent les embouts (22) est un élément standard qui présente une empreinte mâle et une empreinte femelle permettant son assemblage avec les autres éléments.

3. Dispositif selon la revendication 2, **caractérisé en ce que** l'assemblage est de type tenon-mortaise.

4. Dispositif selon l'une quelconque des revendications précédentes, **caractérisé en ce que** chacun des éléments (24) qui composent les embouts (22) présente au moins sur sa face interne une cannelure (27) destinée au passage d'un câble de reprise d'effort et deux cannelures (28) destinées au cheminement de câbles électriques.

5. Dispositif selon la revendication 1, **caractérisé en ce que** Les entretoises (23) sont des structures creuses formant des passages au travers desquels passent les câbles de reprise d'effort (13).

6. Procédé de montage dans une antenne linéaire du dispositif selon l'une quelconque des caractéristiques précédentes, **caractérisé en ce que** le positionnement du container dans l'antenne est réalisé par surmoulage d'un des câbles de reprise d'effort sur une des entretoises.
